# EUROPEAN PATENT APPLICATION

(11) **EP 3 595 142 A1**
(43) Date of publication of application: **15.01.2020**
(21) Application number: 18764408.3
(22) Date of filing: 06.03.2018
(51) Int. Cl.: H02K 5/22, B29C 45/14, H01R 43/24, H02K 3/50, H02K 3/52, H02K 15/12

(54) **POWER SUPPLY BODY AND ROTARY ELECTRIC MACHINE**

(30) Priority: 06.03.2017 JP 2017041203
(71) Applicant: Honda Motor Co., Ltd., Tokyo 107-8556 (JP); Newfrey LLC, New Britain, CT 06053 (US)
(72) Inventor: OSUMI Yusuke, Wako-shi Saitama 351-0193 (JP); AKAZAWA Kei, Utsunomiya-shi Tochigi 321-0905 (JP); SUZUKI Masayoshi, Toyohashi-shi Aichi 441-8540 (JP)
(74) Representative: Weickmann & Weickmann PartmbB
(86) International application number: PCT/JP2018/008569
(87) International publication number: WO 2018/164120

(57) **Abstract**

A feeding body is provided which includes: a power supply main body including a conductor; a terminal formed at one end of the power supply main body; and a protection portion formed, by molding, at a junction with the terminal of the power supply main body. The protection portion includes: a clip assembled on the power supply main body; and a cover part formed by molding in a state in which the power supply main body is positioned in a cavity of a mold while a clamp part of the clip is sandwiched between pieces of the mold.

## Description

### Technical Field

The present invention relates to a feeding body connecting each phase coil of a rotary electric machine and the outside and a rotary electric machine having each feeding body.

### Background Art

In rotary electric machines, a conductor is connected to each phase coil and power is transferred, through the conductor, between each phase coil and the outside.

For instance, PATENT DOCUMENT 1 discloses a configuration in which insert molding is used to protect the surrounding of a conductor corresponding to each phase.

### PRIOR ART

### PATENT DOCUMENT

PATENT DOCUMENT 1: Japanese Patent Application Publication No. 2015-133873

### Summary of Invention

### Technical Problem

Meanwhile, the feeding body of PATENT DOCUMENT 1 has a problem of a decrease in positional precision of terminal end portions because a resin injection pressure when molded causes the conductor to move in a mold.

In addition, to prevent the conductor from moving during the molding, the conductor may be directly fixed to the mold. In this case, plating on the conductor surface may be removed. On top of that, a portion from which the plating has been removed is exposed. This is likely to promote corrosion of the conductor.

The present invention has been made in light of the above points. The purpose of the present invention is to prevent a decrease in positional precision of terminal end portions with respect to a feeding body having a protection portion formed at or near the terminals by insert molding.

### Solution to Problem

An aspect of the present invention provides a feeding body comprising: a power supply main body including a conductor; a terminal formed at one end of the power supply main body; and a protection portion formed, by molding, at a junction with the terminal of the power supply main body, the protection portion comprising: a clip assembled on the power supply main body; and a cover part formed by molding in a state in which the power supply main body is positioned in a cavity of a mold while a clamp part of the clip is sandwiched between pieces of the mold.

### Advantageous Effects of Invention

The present invention makes it possible to prevent a decrease in positional precision of terminal end portions with respect to a feeding body having a protection portion formed at or near the terminals by insert molding.

### Brief Description of Drawings

FIG. 1 is a cross-sectional view illustrating a rotary electric machine according to an embodiment.
FIG. 2 is a perspective view illustrating a feeding unit according to an embodiment.
FIG. 3 is a perspective view of a feeding unit according to an embodiment when viewed from the outer circumferential side of a rotary electric machine.
FIG. 4 is diagrams showing a site where a power supply main body and terminals are connected. FIG. 4A is a perspective view. FIG. 4B is a cross-sectional view cut along line IV-IV of FIG. 4A.
FIG. 5 is diagrams showing how a clip is assembled on the site where a power supply main body and terminals are connected. FIG. 5A is a perspective view. FIG. 5B is a cross-sectional view cut along line V-V of FIG. 5A.
FIG. 6 is diagrams showing how a clip is assembled on the site where a power supply main body and terminals are connected and how a cover part looks like after molding. FIG. 6A is a perspective view. FIG. 6B is a cross-sectional view cut along line VI-VI of FIG. 6A.
FIG. 7 is a perspective view illustrating a mold used to form a protection portion by insert molding.
FIG. 8 is a cross-sectional view cut along line VIII-VIII of FIG. 7.
FIG. 9 is a cross-sectional view corresponding to FIG. 8 when a conventional technique is used for the molding.
FIG. 10 is a step flowchart illustrating the steps of manufacturing a feeding unit.

### Description of Embodiments

An embodiment of the present invention is described in detail with reference to the Drawings. Note that in the description, the same elements have the same reference numerals so as to avoid redundancy.

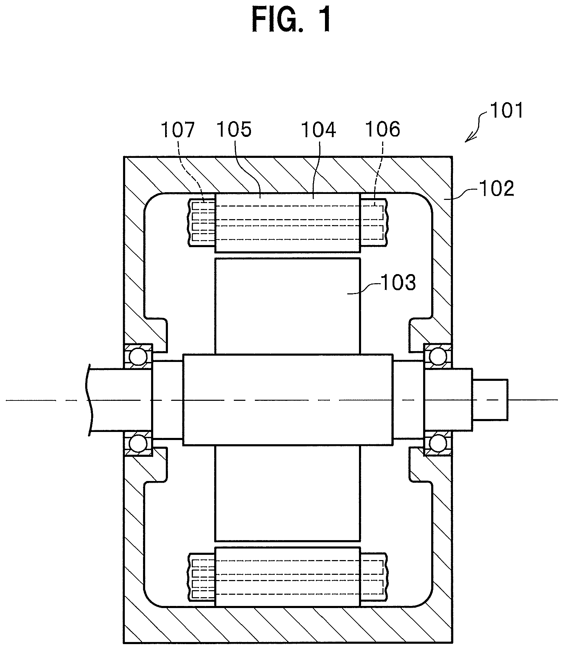

FIG. 1 is a schematic structure diagram (cross-sectional view) showing the entire structure of a rotary electric machine 101 including feeding bodies in this embodiment. The rotary electric machine 101 is mounted on a vehicle, for example, a hybrid vehicle or an electric vehicle, and functions as a driving motor when a power is supplied from outside and functions as an electric power generator in regenerative braking.

Incidentally, without being limited to the rotary electric machine 101, a feeding unit in the present invention can be also applied to a fixed motor, a motor for a different purpose, or a power generator.

Up/down in the description refers to up/down in the figure, and not up/down in a state that the rotary electric machine 101 is installed in a vehicle.

As shown in FIG. 1, the rotary electric machine 101 is provided with a casing 102, a rotor 103, and a stator 104.

The casing 102 is substantially in a cylindrical shape whose both ends are closed, and a cylindrical space is formed therein.

The rotor 103 is axially supported such as to be rotatable around the axially central portion of the casing 102.

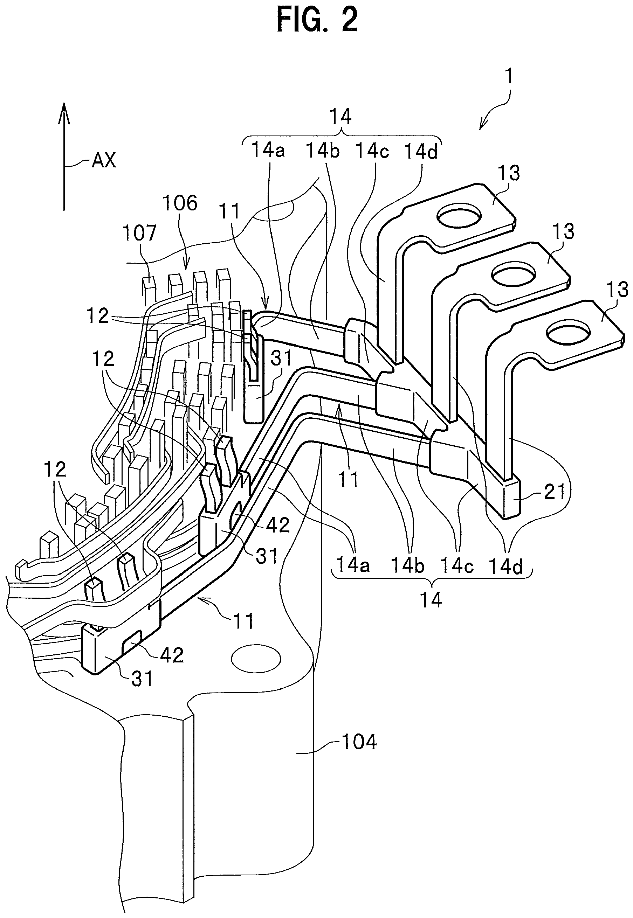

The stator 104 is, as shown in FIG. 2, in a cylindrical shape, and as shown in FIG. 1, the rotor 103 is arranged in the cylinder. The stator 104 is, as shown in FIG. 2, provided with a stator core 105 and coils 106 attached to the stator core 105.

The stator core 105 is provided with a cylindrical core main body and teeth, and is substantially in a cylindrical shape.

The core main body is fixed to the inside of the casing 102 by fitting engagement or the like

The teeth are protrusions in a pectinate shape protruding radially inward from the inner circumferential surface of the core main body at certain intervals. The gaps between teeth neighboring each other in the circumferential direction are set to be slots.

The slots penetrate thorough the stator core 105 in the axial direction, and conductors 107 forming the coils 106 are inserted therein.

The coils 106 are three-phase coils formed by distribution winding of the conductors 107 for the three phases of U-phase, V-phase, and W-phase. Note that the coils 106 of the respective phases in this embodiment are formed by connecting corresponding plural segment coils to each other.

The each segment coil is wound around the stator core 105 while the conductor 107 is inserted in a certain slot. The segment coils of the same phase are joined with each other by TIG welding, laser welding, or the like in either side in the axial direction of the stator core 105.

Incidentally, the structure of the coils 106 can be modified, as appropriate. For example, the coils 106 are not limited to the segment coils, and may be attached to the stator core 105 by concentration winding such as to winding coils around the teeth.

Further, on the stator 104, as shown in FIG. 2, a feeding unit 1 including each feeding body 11 according to the present invention is arranged so as to electrically connect the coil 106 and an external power circuit (not shown).

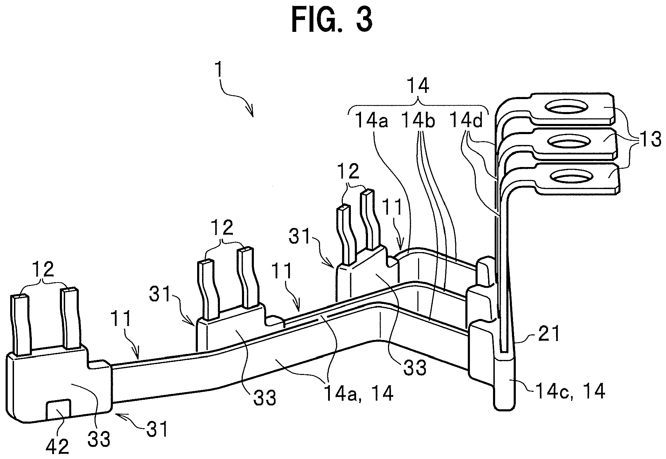

The feeding unit 1 is, as shown in FIG. 2 and FIG. 3, provided with three feeding bodies 11 corresponding to the respective phases U-phase, V-phase, and W-phase, and a resin holding portion 21 that integrally connects and holds the feeding bodies 11.

The respective feeding bodies 11 are formed by bus bars formed in a three-dimensional shape by sheet-metal processing of a conductive plate material, such as a metal (for example copper). Each feeding body 11 corresponds to each bus bar part including coil-side terminals 12, an external-side terminal 13 and a power supply main body 14.

Note that the surface of each feeding body 11 is plated. The plating promotes stabilization of axial force and contact resistance at each terminal as well as help prevent corrosion of the power supply main body 14 due to water and/or ATF (automatic transmission fluid), etc.

The coil-side terminals 12 (terminal portions) are arranged along the outer circumference of the stator 104 such as to be connectable with the conductors 107 forming the coils 106 of the corresponding phase.

The external-side terminals 13 are arranged such as to be connectable with a terminal table (not shown) of an external power circuit (not shown), which is separately set outside the rotary electric machine 101.

The power supply main bodies 14 are formed in shapes which are different corresponding to the respective feeding bodies 11 such as to connect the coil-side terminals 12 connected to the coils 106 and the external-side terminals 13 connected to the terminal table, without a contact with the feeding bodies 11 of the other phases. The power supply main body 14, as shown in FIG. 3, includes a curved portion 14a, a drawn-out portion 14b, a direction-change portion 14c, and an extension portion 14d.

In addition, the connection part between the power supply main body 14 and each coil-side terminal 12, as shown in FIG. 3, is covered by a coil-side protection portion 31 as a protection portion.

The each curved portion 14a, as shown in FIG. 3, is connected at the inner end thereof with the coil-side terminal 12 and disposed such as to match with the outer circumference of the stator 104. In addition, the curved portion 14a is provided with a position-restricting portion 14e.

The each drawn-out portion 14b is connected to the outer end of the curved portion 14a and extends toward radially outer side of the rotary electric machine 101. The angle of the each drawn-out portion 14b with respect to the curved portion 14a is set such that the respective drawn-out portions 14b of the three phases are located substantially at an equal distance from each other and substantially in parallel to each other.

The each direction-change portion 14c is connected at the inner end thereof with the outer end of the drawn-out portion 14b, and changes the direction thereof so that the plate surfaces of the respective bus bars of the three phases are arrayed on the same plane.

The each extension portion 14d extends such that the direction of the plate surface of the bus bar remains the same as the direction of the plate surface of the direction-change portion 14c, and extends in the axial direction AX (the upper/lower direction in FIG. 2) of the rotary electric machine 101 to connect the direction-change portion 14c and the external-side terminal 13.

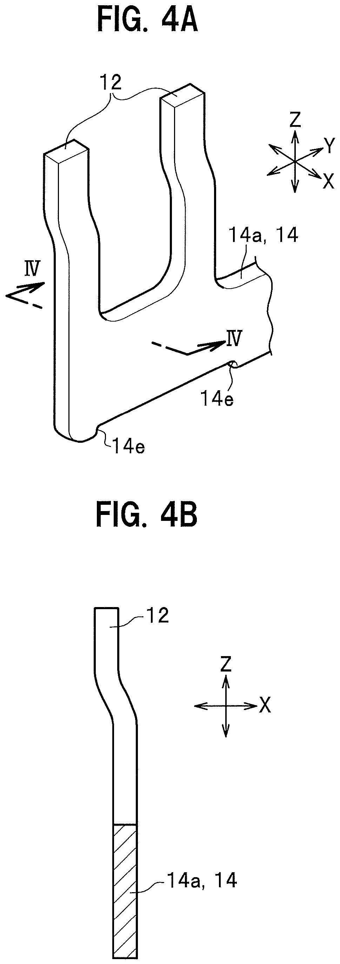

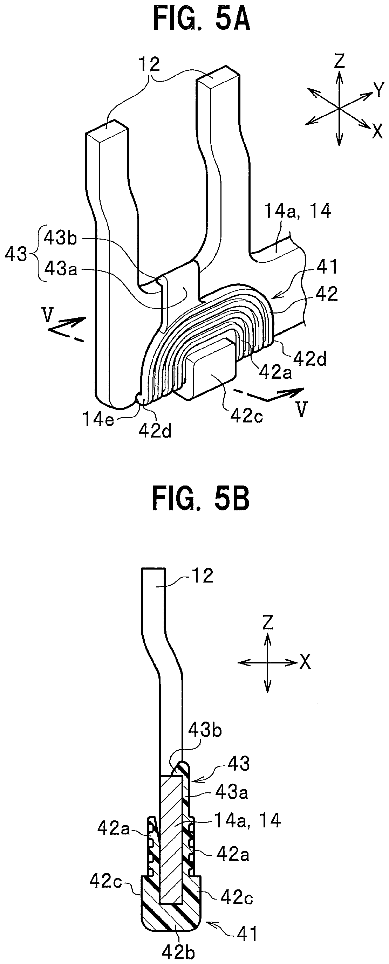

As shown in FIGS. 4A and 4B, the position-restricting portion 14e is composed of a pair of wall sections that face to each other and provide a recess with an approximately U-shaped cross section, which recess is formed at a lower edge part of a site connecting coil-side terminals 12 on the curved portion 14a. Then, as shown in FIGS. 5A and 5B, the position-restricting portion 14e is engaged with the below-described clip 41 when the clip 41 is assembled on the power supply main body 14, so that the clip 41 is correctly positioned in the Y direction.

As shown in FIG. 2, each of the coil-side protection portion 31 (protection portion) protects the connection part between each coil-side terminal 12 and the power supply main body 14 so that the feeding body 11 as a draw-out line does not accidentally contact with the stator core 105, the coil 106, or the like. For this purpose, the dimensions of the respective portions and the material of the coil-side protection portion 31 are set so that spark discharge, short, or the like is not caused by a voltage applied to the feeding body 11.

As shown in FIG. 3, each coil-side protection portion 31 includes: the clip 41 assembled on the power supply main body 14; and a cover part 33 produced around the assembled clip 41 and the power supply main body 14 by insert molding with resin material.

Note that the clip 41 and the cover part 33 are made of identical resin material.

As shown in FIGS. 5A and 5B, the clip 41 is provided with a clip main body 42 and a stopper pawl 43.

The clip main body 42 has an approximately U-shaped cross section and is formed of a pair of opposing slide contact pieces 42a and a connection piece 42b connecting edges of the respective slide contact pieces 42a. In addition, the clip main body 42 is provided with a clamp part 42c.

The distance between the opposing slide contact pieces 42a is set to substantially the same as the plate thickness of a bus bar. Then, the bus bar is inserted, without a gap, between the slide contact pieces 42a.

Both ends of the connection piece 42b are set as restricted sections 42d. Then, the connection piece 42b is fit, without a gap, between the position-restricting portions 14e of the power supply main body 14, such that the respective restricted sections 42d are engaged with the corresponding position-restricting portions 14e.

The clamp part 42c is composed of a protrusion with an approximately U-shaped cross section. This protrusion protrudes outward extending from a center section of the lower edge of one slide contact piece 42a on the external surface side, over the external surface of the connection piece 42b, to a center section of the lower edge of the other slide contact piece 42a on the external surface side.

The stopper pawl 43 (engagement means) is provided extending upward (in the Z direction) from the upper edge of one slide contact piece 42a. Then, the stopper pawl 43 is provided with an elastic arm 43a and a hook 43b.

The elastic arm 43a can be bent and deformed in the plate thickness direction (X-direction) of a bus bar.

The hook 43b is disposed at a tip of the elastic arm 43a and can be engaged with an upper edge portion of the power supply main body 14.

The following describes how to assemble the clip 41.

As illustrated in FIGS. 4A and 4B and FIGS. 5A and 5B, a lower edge portion of the power supply main body 14 is first inserted into a U-shaped groove of the clip main body 42 and the clip 41 is then made to slide from the lower side to the upper side. Here, the elastic arm 43a of the stopper pawl 43 is bent, so that the hook 43b moves while touching the plate surface of the power supply main body 14.

Then, when the distance between the connection piece 42b and the lower edge portion of the power supply main body 14 is zero, the elastic arm 43a is elastically returned and the hook 43b is subsequently engaged with the upper edge of the power supply main body 14.

In accordance with the above procedure, the clip 41 is assembled on the power supply main body 14.

Dislocation of the clip 41, which has been assembled on the power supply main body 14 by such a procedure, on the power supply main body 14 is restricted.

That is, the dislocation in the plate thickness direction (the X direction) can be restricted by causing the opposing slide contact pieces 42a to contact the plate surfaces of the power supply main body 14.

The dislocation in the extension direction of the power supply main body 14 (the Y direction) can be restricted by engaging both ends of the connection piece 42b, which ends are the restricted sections 42d, with the corresponding position-restricting portion 14e.

The dislocation in the vertical direction (the Z direction) can be restricted such that the dislocation in the upper direction can be restricted by causing the connection piece 42b to contact the lower edge portion of the power supply main body 14; and the dislocation in the lower direction can be restricted by engaging the stopper pawl 43 with the upper edge of the power supply main body 14.

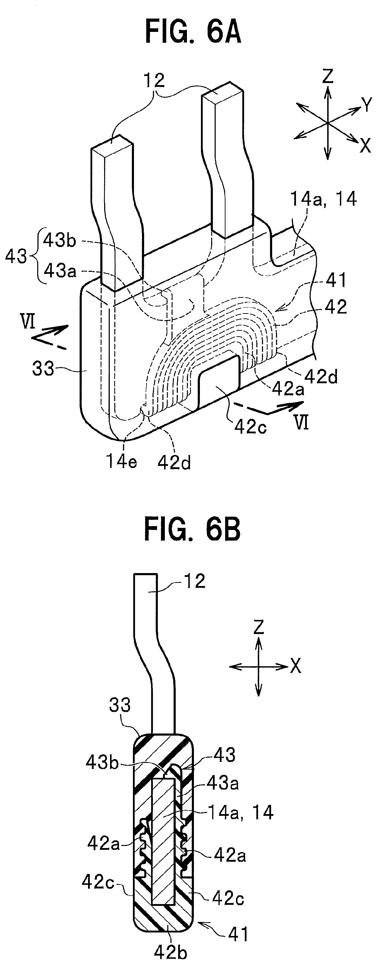

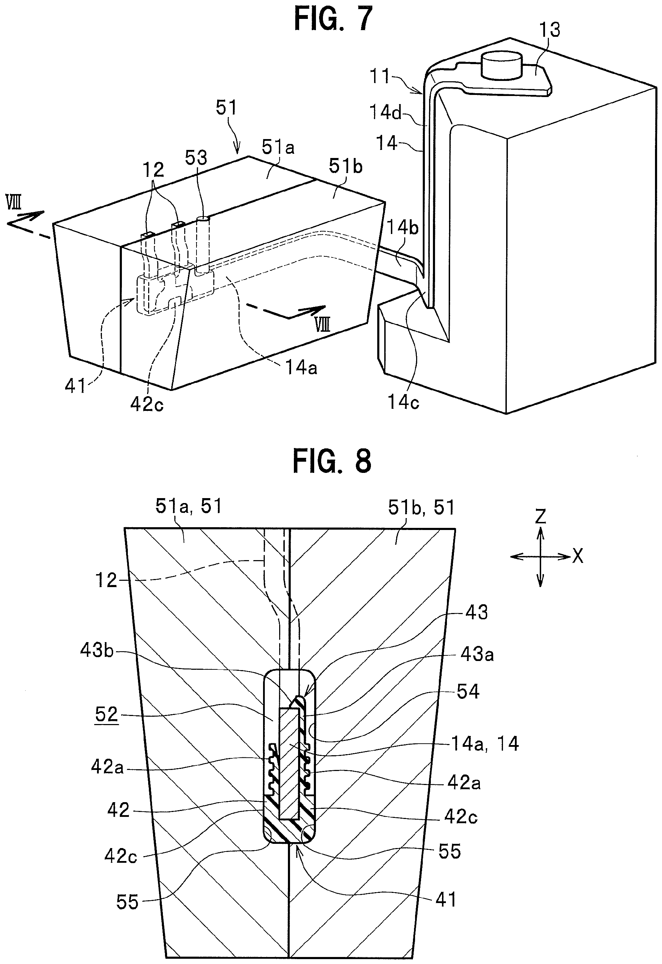

The cover part 33, as shown in FIGS. 6A and 6B, is produced by molding in a state in which the clamp part 42c of the clip 41 is sandwiched between pieces of a mold 51 and the power supply main body 14, together with the clip 41, is set and positioned in a cavity 52 of the mold 51 (see FIGS. 7 and 8).

Specifically, the cover part 33 covers the position-restricting portion 14e, which restricts the dislocation of the clip 41, as well as a junction between the power supply main body 14 and each coil-side terminal 12.

In addition, the cover part 33 is molded such that the surface thereof and the surface of the clamp part 42c are leveled on the same plane.

The resin holding portion 21, as shown in FIGS. 2 and 3, is produced by molding using resin material with insulation property. In addition, the resin holding portion 21 keeps the respective three-phase coil-side terminals 12 at positions allowing for connection with given conductors 107 and connects and holds the respective three-phase external-side terminals 13 at positions fit for their positions on a terminal table (not shown).

The following describes the mold 51 used to mold the cover part 33.

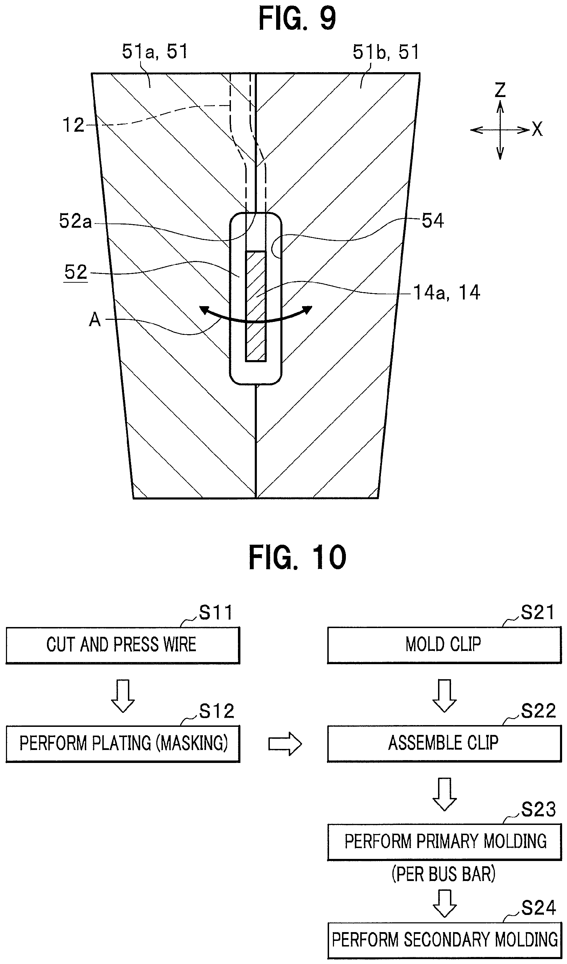

First, in conventional molding processes as shown in FIG. 9, the clip 41 is not assembled on the power supply main body 14, so that the power supply main body 14 hangs in the cavity 52. Because of this, molten resin, which is injected through a gate 53 into the cavity 52, directly hits the power supply main body 14 hanged.

The injected molten resin causes the power supply main body 14 to swing (i.e., move, vibrate) in the cavity 52 such that as indicated by arrow A, the curved portion 14a pivots on an edge 52a of the cavity 52. Then, the molten resin is cooled and solidified while the power supply main body 14 is tilted. This causes, after the molding, a decrease in positional precision of coil-side terminal 12 end portions.

Here, in this embodiment as shown in FIGS. 7 and 8, the clip 41 is assembled on the power supply main body 14 while substantially the same mold 51 as each conventional mold is used; and the power supply main body 14 attached to the clip 41 is arranged in the cavity 52. Then, the clip 41 is sandwiched between the mold 51 pieces and the power supply main body 14 is thus immobilized in the cavity 52. This prevents the power supply main body 14 from vibrating during molding.

As shown in FIGS. 7 and 8, the mold 51 used in this embodiment includes a movable mold 51a and a fixed mold 51b.

The movable mold 51a and the fixed mold 51b are separated by the YZ plane penetrating the power supply main body 14. Then, the movable mold 51a slides in the X direction.

The cavity 52 is defined by molding surfaces (recesses of the molds) 54, each defined by a mating face between the movable mold 51a and the fixed mold 51b. Then, the shape of the cavity 52 is the outline shape of the cover part 33 after the molding.

The upper surface of the mold 51 is provided with the gate 53 and this opening is in communication with the cavity 52.

Further, part of the molding surface 54 is set to a sandwiching part 55.

With respect to the YZ plane, each sandwiching part 55 is set to a site corresponding to a power supply main body 14 edge portion located opposite to the coil-side terminals 12. Specifically, the sandwiching parts 55 of the mold 51 and the clamp part 42c of the clip 41 are positioned so as to effectively prevent, by sandwiching the clamp part 42c, the power supply main body 14 (curved portion 14a) from swinging (vibrating) during molding.

In addition, each sandwiching part 55 has neither a step nor a groove with respect to the other sites of the molding surface 54. Due to this, the surface of the clamp part 42c and the surface of the cover part 33 are leveled on the same plane after the molding.

After the movable mold 51a is mated to the fixed mold 51b and the mold 51 is closed, the clamp part 42c of the clip 41 arranged in the cavity 52 is sandwiched between the sandwiching parts 55.

Then, the feeding body 11 is gripped by the clip 41 upon receipt of the sandwiching force of the sandwiching parts 55 and the power supply main body 14 is thus immobilized in the cavity 52.

Hereinafter, the molding procedure is described (see FIGS. 7 and 8).

First, the clip 41 is assembled (see FIGS. 5A and 5B) on the power supply main body 14 (see FIGS. 4A and 4B).

Next, the power supply main body 14, together with the assembled clip 41, is arranged in the cavity 52 of the fixed mold 51b.

Then, the movable mold 51a is mated to the fixed mold 51b, so that the cavity 52 is closed (see FIG. 8). Here, as shown in FIG. 8, the sandwiching parts 55 are in contact with the clamp part 42c of the clip 41, so that the curved portion 14a is immobilized, via the clamp part 42c, in the cavity 52.

Subsequently, molten resin is injected through the gate 53 into the cavity 52.

After the molten resin is cooled and solidified, the feeding body 11 is removed from the mold 51. In this way, molding of the feeding body 11 is completed (see FIGS. 6A and 6B).

Hereinafter, the steps of manufacturing the feeding unit 1 are described (see FIG. 10).

First, at Step S11 (step of cutting and pressing a wire(s)), a feeding body 11 is cut out from a plate-shaped base material and is shaped as a prescribed form.

Next, at Step S12 (step of plating (masking)), the surface of the feeding body 11 is plated.

Also, in addition to sheet-metal processing of the feeding body 11, a clip 41 is molded at Step S21 (step of molding a clip).

Then, at Step S22 (step of assembling a clip), the plated feeding body 11 and the molded clip 41 are collected and the clip 41 is assembled on the feeding body 11.

After that, at Step S23 (step of performing primary molding), the surrounding of the clip 41 is molded to produce a coil-side protection portion 31 (the feeding body 11 is completed).

Further, at Step S24 (step of performing secondary molding), a resin holding portion 21 is molded on each feeding body 11 to integrate three of the feeding body 11 as one entity.

The above steps are used to complete the feeding unit 1.

The following describes advantageous effects of the feeding body 11 according to this embodiment.

In this embodiment, the clip 41 is assembled on the power supply main body 14; and the coil-side protection portion 31 (protection portion) is molded with a resin over the clip 41.

This configuration can prevent a decrease in positional precision of the coil-side terminal 12 end portions. This decrease is caused because the coil-side protection portion 31 is molded at a site of the power supply main body 14, which site is positioned at or near each coil-side terminal 12.

In this embodiment, the clip 41 and the cover part 33 are made of identical resin material.

This causes the clip 41 and the cover part 33 to tightly attach to each other and causes no difference in thermal expansion or shrinkage. Accordingly, it is possible to suppress the occurrence of a crack at a parting line.

In addition, the crack occurrence suppression can prevent corrosion of the power supply main body 14 from occurring due to infiltration of water and ATF, etc., through the crack.

In this embodiment, the position-restricting portion 14e is engaged with the restricted sections 42d while the clip 41 is assembled on the power supply main body 14.

Because of this, it is unnecessary to provide another means for holding the clip 41 on the power supply main body 14. Besides, the clip 41 can be positioned on the power supply main body 14 by using a relatively simple structure.

In this embodiment, the surface of the cover part 33 and the surface of the clamp part 42c are leveled. When an interface between the cover part 33 and the clamp part 42c has a step, stress is concentrated on this step portion, so that a crack is likely to occur. However, because the surface of the cover part 33 and the surface of the clamp part 42c are leveled, such a crack can be prevented from occurring.

Meanwhile, if the interface portion is provided with a step while the shape of the clamp part 42c is taken into consideration, mold-processing cost rises substantially.

Further, stress is concentrated even on a mold portion corresponding to the step portion.

This promotes wear of the mold, so that mold maintenance cost also rises substantially.

In this embodiment, the stopper pawl 43 (engagement means) is engaged with the power supply main body 14 while the clip 41 is assembled on the power supply main body 14.

Because of this, it is unnecessary to provide another means for holding the clip 41 on the power supply main body 14. Besides, the clip 41 can be positioned on the power supply main body 14 by using a relatively simple structure.

Note that the power supply main body 14 is not limited to conductors composed of bus bars and can be structured using various forms of conductors. For instance, a plurality of wires with a circular cross section may be bundled to produce the power supply main body 14. Then, use of such wires can also achieve substantially the same advantageous effects as in the case of bus bars.

### Reference Signs List

- 11: Feeding body
- 12: Terminal (Coil-side terminal)
- 14: Power supply main body
- 14e: Position-restricting portion
- 31: Protection portion (Coil-side protection portion)
- 33: Cover part
- 41: Clip
- 42c: Clamp part
- 42d: Restricted section
- 43: Engagement means (Stopper pawl)
- 51: Mold
- 101: Rotary electric machine

## Claims

1. A feeding body comprising:
a power supply main body including a conductor;
a terminal formed at one end of the power supply main body; and
a protection portion formed, by molding, at a junction with the terminal of the power supply main body,
the protection portion comprising:
a clip assembled on the power supply main body; and
a cover part formed by molding in a state in which the power supply main body is positioned in a cavity of a mold while a clamp part of the clip is sandwiched between pieces of the mold.

2. The feeding body according to claim 1, wherein the clip and the cover part are made of identical resin material.

3. The feeding body according to claim 1 or 2, wherein the power supply main body comprises a position-restricting portion at a site covered by the cover part; and
the clip comprises a restricted section capable of being engaged with the position-restricting portion while the clip is assembled on the power supply main body.

4. The feeding body according to any one of claims 1 to 3, wherein a surface of the cover part and a surface of the clamp part are leveled.

5. The feeding body according to any one of claims 1 to 3, wherein the clip comprises an engagement means configured to be able to be engaged with the power supply main body.

6. A rotary electric machine comprising the feeding body according to any one of claims 1 to 5.
